# EUROPEAN PATENT APPLICATION

(11) **EP 4 156 363 A1**
(43) Date of publication of application: **29.03.2023**
(21) Application number: 21922659.4
(22) Date of filing: 27.12.2021
(51) Int. Cl.: H01M 10/0525, H01M 10/42, H01M 10/058

(54) **SAFE LITHIUM-ION BATTERY AND MANUFACTURING METHOD THEREFOR**

(30) Priority: 28.01.2021 CN 202110114583
(71) Applicant: REPT BATTERO Energy Co., Ltd., Wenzhou, Zhejiang 325024 (CN); Shanghai Ruipu Energy Co., Ltd., Shanghai 201206 (CN)
(72) Inventor: CAO, Hui, Shanghai 201206 (CN); HOU, Min, Shanghai 201206 (CN); LIU, Chan, Shanghai 201206 (CN); HU, Yiyang, Shanghai 201206 (CN); YU, Zhaoyu, Wenzhou, Zhejiang 325024 (CN)
(74) Representative: Potter Clarkson
(86) International application number: PCT/CN2021/141716
(87) International publication number: WO 2022/161070

(57) **Abstract**

Disclosed in the present invention are a safe lithium-ion battery and a manufacturing method therefor. A battery positive electrode material is lithium iron phosphate, or a mixture of lithium iron phosphate and one or more of lithium nickel cobalt manganese oxide, lithium manganate, and lithium cobalt oxide, or a mixture of lithium iron phosphate and one or two of lithium manganese iron phosphate and lithium-rich lithium iron oxide. The lithium iron phosphate accounts for more than 60% (mass ratio). In the manufacturing process of an electrode plate (a positive plate or a negative plate), a redox shuttle agent is added as an additive. The additive can start a redox shuttle reaction at a specific voltage to convert redundant electrical energy into thermal energy; continuous charging can be tolerated under a voltage of 3.8-3.95V, thereby improving safety performance of the battery.

## Description

### Technical Field

The present invention relates to the field of lithium-ion batteries, and relates to a safe lithium-ion battery and manufacturing method therefor, specifically relates to a safe lithium-ion battery and its manufacturing method that adds a redox shuttle agent during the production process of an electrode plate (positive plate or negative plate).

### Background

In recent years, with the popularization of electric vehicles, the demands for energy density, cycle life, rate characteristics, low temperature performance and safety performance of batteries are highly increased.

Since the cell capacity is getting bigger and bigger, generally exceeding 100-200 ampere-hours, the protection board and the 100mA-level equalizing current provided by the electronic control device alone can barely meet the needs of practical applications. It is imminent to develop a lithium-ion battery with a large current balancing capability of 1 ampere to 10 amperes.

At present, in this field, redox shuttle additives are often added to lithium-ion battery electrolytes to conduct research and development on lithium-ion batteries with large current equalizing ability.

Through the search of existing patent documents, it is found that the Chinese invention patent with application number 201310594341.1 discloses a float charge tolerant lithium-ion battery module and its float charge method. It can meet the application requirements of energy storage and other fields in terms of electrical performance and safety performance. However, it is also by means of adding redox shuttle additives in the electrolyte. The redox shuttle agent will be continuously consumed during the self-balancing process of the lithium-ion battery, its self-balancing capability (definition: self-balancing capability refers to the electric capacity consumed by the battery when it continues to carry out redox shuttle reactions at a certain self-balancing voltage, the unit is Ah, which reflects the strength of the battery's self-balancing ability) is basically proportional to the amount added. The addition of redox shuttle additives to the electrolyte is affected by the low solubility of the redox shuttle agent in the electrolyte solvent and the limited amount of electrolyte injected into the battery. The total addition amount of the redox shuttle agent is limited, which ultimately affects the self-balancing capability of the battery. The method to add more redox shuttle agents into the battery system to improve the self-balancing capability of the battery is the key to its large-scale application. In addition, the ways to increase the self-balancing capability of the battery and at the same time make it have high rate characteristics, low temperature performance, and safety performance is also a technical problem to be solved urgently in this field.

### Summary

The aim of the present invention is to provide a safe lithium-ion battery and a manufacturing method therefor.

The invention relates to a safe lithium-ion battery, wherein the positive plate and/or the negative plate of the lithium-ion battery contain redox shuttle agent.

The redox shuttle agent is selected one or more from 2,5-di-tert-butyl-1,4 dimethoxybenzene, 3,5-di-tert-butyl-1,2-dimethoxybenzene, 4-tert-butyl-1,2-dimethoxybenzene, naphthalene, anthracene, thianthrene, and anisole.

As an embodiment, a positive electrode active material of the lithium-ion battery is lithium iron phosphate, or a mixture of one or more of lithium iron phosphate and lithium nickel cobalt manganese oxide, lithium manganate, and lithium cobalt oxide.

As an embodiment, when the positive electrode active material of the lithium-ion battery is the mixture of one or more of lithium iron phosphate and lithium nickel cobalt manganese oxide, lithium manganate, and lithium cobalt oxide, the mass ratio of the lithium iron phosphate is greater than 60%.

As an embodiment, a positive electrode active material of the lithium-ion battery is a mixture of one or more of lithium iron phosphate, lithium manganese iron phosphate and lithium-rich lithium iron oxide.

As an embodiment, the positive electrode active material of the lithium-ion battery is a mixture of one or more of lithium iron phosphate, lithium manganese iron phosphate and lithium-rich lithium iron oxide, the mass ratio of the lithium iron phosphate is greater than 60%.

As an embodiment, the redox shuttle agent is added during a slurry-making process of the positive plate or the negative plate, and the addition amount of the redox shuttle agent is 0.1-10% of a total solid mass of the positive electrode or the negative electrode.

As an embodiment, the working temperature range of the lithium-ion battery is -40°C to 70°C.

The invention also relates to a manufacturing method of a safe lithium-ion battery that mentioned before, the method including the following steps:
S1. preparing a positive plate;
S1-1. mixing a positive electrode active material, binder, conductive agent and redox shuttle agent, using N-methylpyrrolidone as a dispersion medium, stirring and making a positive electrode slurry, and coating the positive electrode slurry on a positive electrode current collector to form a positive plate A1;
   or,
S1-2. mixing a positive electrode active material, binder and conductive agent, using N-methylpyrrolidone as a dispersion medium, stirring and making a positive electrode slurry, and coating the positive electrode slurry on a positive electrode current collector to form a positive plate A2;
S2. preparing a negative plate;
S2-1. mixing graphite, binder, conductive agent and redox shuttle agent, using N-methylpyrrolidone as a dispersion medium, stirring and making a negative electrode slurry, and coating the negative electrode slurry on a negative electrode current collector to form a negative plate B1;
   or,
S2-2. mixing graphite, binder and conductive agent, using N-methylpyrrolidone as a dispersion medium, stirring and preparing a negative electrode slurry, and coating the negative electrode slurry on a negative electrode current collector to form a negative plate B2;
S3. combining the positive plate A1 with the negative plate B1 or the negative plate B2 into a dry electrical cell, injecting liquid electrolyte and being soaking;
or, combining the positive plate A2 with the negative plate B1 into a dry electrical cell, injecting liquid electrolyte and being soaking.

As an embodiment, in step the S1-1, a mass ratio of the positive electrode active material, the binder, the conductive agent and the redox shuttle agent is 83-97 : 1~3 : 1.9∼4 : 0.1~10.

As an embodiment, in the step S2-1, a mass ratio of the graphite, the binder, the conductive agent and the redox shuttle agent is 85~97 : 2~3 : 0~2 : 0.1~10.

As an embodiment, in the step S 1-2, a mass ratio of the positive electrode active material, the binder and the conductive agent is 93-97 : 1∼3 : 1.9∼4.

As an embodiment, in the step S2-2, a mass ratio of the graphite, the binder and the conductive agent is 95∼98 : 2~3 : 0∼2.

Compared with the existing art, the present invention has the following beneficial effects:
(1) Depending on the type and ratio of the redox shuttle agent, the self-equilibrium start-up voltage ranges from 3.8-3.95V;
(2) Depending on the amount of redox shuttle agent added, the self-equilibrium current ranges from 1 ampere to 10 amperes;
(3) Depending on the amount of redox shuttle agent added, the self-balancing capability can reach several times to hundreds of times of the capacity of a battery cell;
(4) During the pre-charging process of the battery of the present invention, when charging with small current, a small amount of redox shuttle agent in the positive plate or negative plate will gradually dissolve, and participate in the formation of interface passive film at the microscopic interface of the positive and negative particles together with the electrolyte. At the same time, due to the dissolution of the redox shuttle agent, the positive and negative electrodes are constructed into microscopic porous electrodes, which is conducive to the transmission of lithium-ions during the charge and discharge process, and is conducive to improving the charge and discharge rates and low temperature performance of the battery;
(5) In the normal charge and discharge process of the battery of the present invention, when the self-balancing function needs to be activated, the upper limit voltage of the battery is adjusted to be above 3.95V, when the battery is charged to the voltage range of 3.8-3.95V, the redox shuttle agent plays a role and the battery works continuously at a certain voltage, at the same time, the redox shuttle agent inside the electrode plate will also slowly dissolve, so that the battery has a safety protection function to prevent overcharging throughout the life cycling;
(6) In the battery of the present invention, the positive electrode active material is mainly lithium iron phosphate, and the mass ratio is greater than 60%, one or more types of lithium nickel cobalt manganese oxide, lithium manganese, lithium cobalt oxide, lithium manganese iron phosphate, and lithium-rich lithium iron oxide can be added to adjust other performances of the battery, such as rate characteristics, low temperature performance, safety performance, mass energy density, volumetric energy density, etc.

### Brief Description of the Drawings

Other characteristics, objects and advantages of the invention will become more apparent by reading the detailed description of non-limiting embodiments made with reference to the following drawings:
FIG. 1 is a structural schematic view of a lithium-ion secondary battery 71173200-280Ah;
FIG. 2 is a schematic view of a voltage-time curve of the lithium-ion secondary battery of embodiment 1;
FIG. 3 is a schematic view of a voltage-capacity multiples curve of the lithium-ion secondary battery of embodiment 1;
FIG. 4 is a schematic view of a voltage-discharge capacity percentage curve of the lithium-ion secondary battery of embodiment 1, 2, 3, 4, 5 and comparative example 1 (0.2C rate @ -20°C);
FIG. 5 is a schematic view of a voltage-charge capacity percentage curve of the lithium-ion secondary battery of embodiment 1, 2, 3, 4, 5 and comparative example 1 (2C rate);
FIG. 6 is a schematic view of a voltage-discharge capacity percentage curve of the lithium-ion secondary battery of embodiment 1, 2, 3, 4, 5 and comparative example 1 (2C rate);
FIG. 7 is a schematic view of a voltage-time curve schematic of the lithium-ion secondary battery of embodiment 4;
FIG. 8 is a schematic view of a voltage-capacity multiples curve of the lithium-ion secondary battery of embodiment 4.

### Preferred Embodiment of the Present Invention

The present invention will be described in detail below in conjunction with embodiments. The following embodiments will help those skilled in the art to further understand the present invention, but do not limit the present invention in any form. It should be noted that those skilled in the art can make some adjustments and improvements without departing from the concept of the present invention. These all belong to the protection scope of the present invention. In addition, the specific process parameters in the following embodiments also need to be adjusted to appropriate parameters according to actual conditions.

Definition:
2,5-di-tert-butyl-1,4-dimethoxybenzene: hereinafter referred to as shuttle agent 1;
thianthrene: hereinafter referred to as shuttle agent 2;
polyvinylidene fluoride: hereinafter referred to as PVDF;
N-methylpyrrolidone: hereinafter referred to as NMP;
the formula ratios in the embodiments and comparative examples are mass ratios unless otherwise specified.

### Embodiment 1, the lithium-ion battery with 3.8-3.95V self-balancing voltage

Positive plate preparation: first, dissolve the binder PVDF and the shuttle agent 1 in the solvent NMP, and keep stirring to dissolve them fully until the solution is clear. Add the lithium iron phosphate active material LiFePO₄ and the conductive agent SP (super P) to the above solution, and mix them to form a slurry. Among them, the solid mass ratio of LiFePO₄, SP, PVDF and shuttle agent 1 is 94:2:2:2, and the solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate. The compaction density is 2.4g/cm³, and the positive plate is made.

Negative plate preparation: stir and disperse graphite, conductive agent SP, binder PVDF and NMP evenly into a slurry (the mass ratio of graphite, SP and binder is 96: 1:3). The solid content of the slurry is 50%. The slurry is coated on a 6µm-thickness blank copper foil. The solvent is completely volatilized after drying in an oven. The surface density of the coating is 150g/m² (double-sided), and then rolled by an electrode plate. The compaction density is 1.65g/cm³, and the negative plate is made.

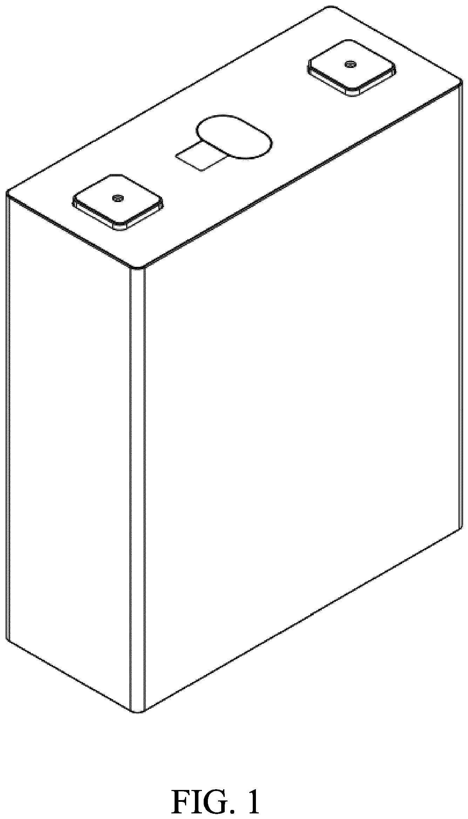

Lithium-ion secondary battery preparation: the positive and negative plate and isolating film (PP single-layer isolating film) are wound into an electrical cell. Then the electrical cell is put into a battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4:3), and 2wt.% VC (vinylene carbonate). Welding and sealing, and then through chemical formation and aging processes to produce a lithium-ion secondary battery 71173200-280Ah; as shown in FIG 1.
Test process: the test environment temperature is controlled at 25±2°C;

Test the self-balancing performance of the battery according to the following steps:
(1) Charging with a constant current and constant voltage, wherein the current is 280A, the cut-off voltage is 3.65V, the cut-off current is 14A;
(2) Charging with a constant current, wherein the current is 14A, the cut-off voltage is 4.0V, the cut-off time is 12h;
(3) End of test.

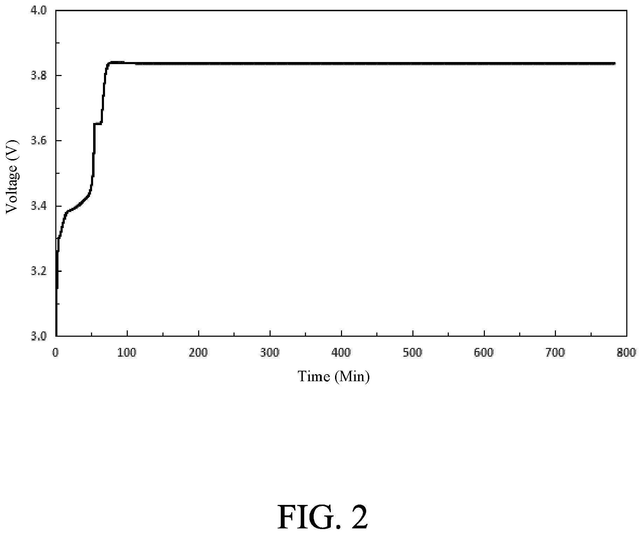

From the voltage-time curve in FIG. 2, it can be seen that the cell voltage is stable at 3.83V, indicating that the shuttle agent 1 is undergoing a redox shuttle reaction, converting electrical energy into thermal energy, so that the cell voltage remains stable and does not rise.

Test the self-balancing capability of the battery according to the following steps:
(1) Charging with a constant current and constant voltage, wherein the current is 280A, the cut-off voltage is 3.65V, the cut-off current is 14A;
(2) Charging with a constant current, wherein the current is 14A, the cut-off voltage is 4.0V, the cut-off time is 6,000h;
(3) End of test.

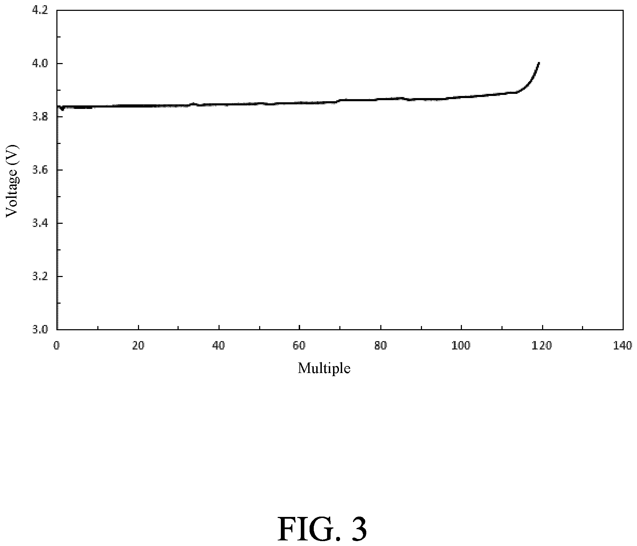

From the voltage-capacity multiple curve in FIG. 3, it can be seen that the shuttle agent 1 will slowly be consumed during the redox shuttle reaction, and the battery voltage will rise slowly. When the self-balancing capability reaches to about 120 times of the capacity of the battery cell (converted according to the 14A charging current, about 2,400h), the shuttle agent 1 is exhausted, the battery no longer has self-balancing ability, the battery voltage reaches the protection voltage of 4.0V, and the experiment is stopped.

Test the low temperature performance of the battery according to the following steps:
(1) Charging with a constant current and constant voltage, wherein the current is 280A, the cut-off voltage is 3.65V, the cut-off current is 14A;
(2) Putting the electrical cell into a -20°C oven and rest for 24h;
(3) Discharging with a constant current, wherein the current is 56A, the cut-off voltage is 2.0V;
(4) End of test.

Test the rate charging characteristics of the battery according to the following steps:
(1) Discharging with a constant current, wherein the current is 280A, the cut-off voltage is 2.0V;
(2) Rest for 30 minutes;
(3) Charging with a constant current, wherein the current is 560A, the cut-off voltage is 3.65V;
(4) End of test.

Test the rate discharging characteristics of the battery according to the following steps:
(1) Charging with a constant current and constant voltage, wherein the current is 280A, the cut-off voltage is 3.65V, the cut-off current is 14A;
(2) Rest for 30 minutes;
(3) Discharging with a constant current, wherein the current is 560A, the cut-off voltage is 2.0V;
(4) End of test.

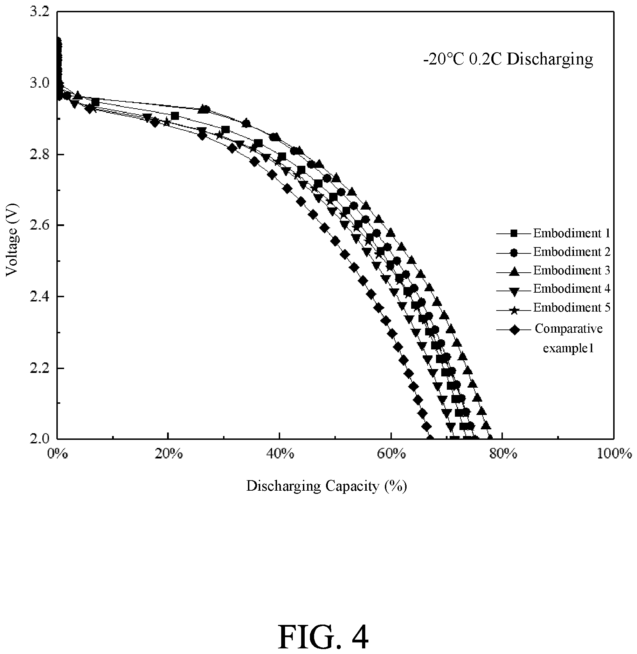

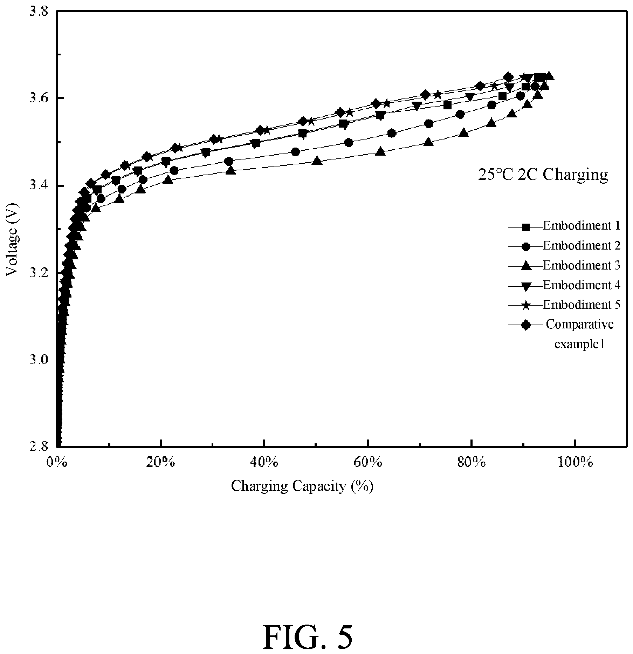

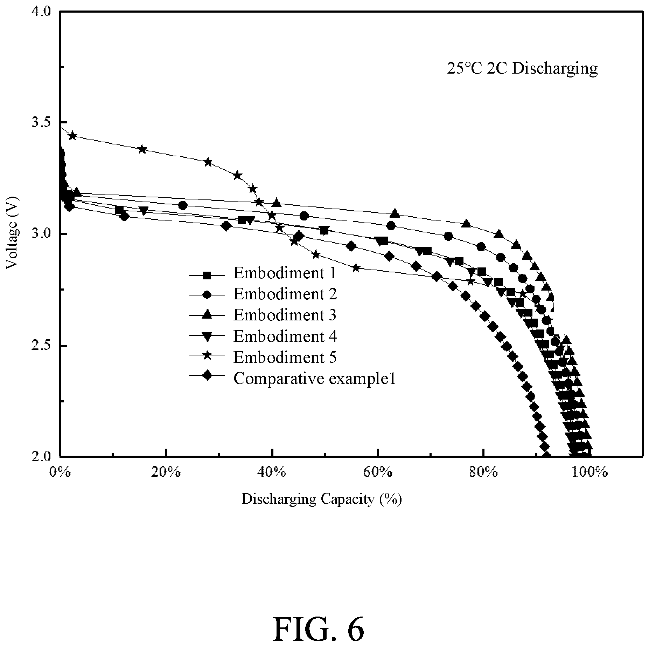

Specific data can be seen in FIG. 4, FIG. 5, FIG. 6 and Table 1.

### Embodiment 2, the lithium-ion battery with 3.8-3.95V self-balancing voltage

Positive plate preparation: first, dissolve the binder PVDF in the solvent NMP, and stir it until the solution is clear. Add the lithium iron phosphate active material LiFePO₄ and the conductive agent SP to the above solution, and mix them to form a slurry. Among them, the solid mass ratio of LiFePO₄, SP and PVDF is 96:2:2, and the solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate, the compaction density is 2.4g/cm³, and the positive plate is made.

Negative plate preparation: stir and disperse graphite, conductive agent SP, binder PVDF, shuttle agent 1 and NMP evenly into a slurry (the mass ratio of graphite, SP, binder and shuttle agent 1 is 92: 1:3:4), and the solid content of the slurry is 50%. The slurry is coated on a 6µm-thickness blank copper foil. The solvent is completely volatilized after drying in an oven. The surface density of the coating is 150g/m² (double-sided), and then rolled by an electrode plate, the compaction density is 1.65g/cm³, and the negative plate is made.

Lithium-ion secondary battery preparation: the positive and negative plate and isolating film (PP single-layer isolating film) are wound into an electrical cell. Then the electrical cell is put into a battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4: 3), and 2wt.% VC (vinylene carbonate). Welding and sealing, and then through chemical formation and aging processes to produce a lithium-ion secondary battery 71173200-280Ah.

The self-balancing performance, self-balancing capability, low-temperature performance, rate charging characteristics, and rate discharging characteristics of the battery were tested; the results are shown in Table 1.

### Embodiment 3, the lithium-ion battery with 3.8-3.95V self-balancing voltage

Positive plate preparation: first, dissolve the binder PVDF and the shuttle agent 1 in the solvent NMP, and keep stirring to dissolve them fully until the solution is clear. Add the lithium iron phosphate active material LiFePO₄ and the conductive agent SP to the above solution, and mix them to form a slurry. Among them, the solid mass ratio of LiFePO₄, SP, PVDF and shuttle agent 1 is 95:2:2:1, and the solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate, the compaction density is 2.4g/cm³, and the positive plate is made.

Negative plate preparation: stir and disperse graphite, conductive agent SP, binder PVDF, shuttle agent 1 and NMP evenly into a slurry (the mass ratio of graphite, SP, binder and shuttle agent 1 is 94: 1:3:2), and the solid content of the slurry is 50%. The slurry is coated on a 6µm-thickness blank copper foil. The solvent is completely volatilized after drying in an oven. The surface density of the coating is 150g/m² (double-sided), and then rolled by an electrode plate, the compaction density is 1.65g/cm³, and the negative plate is made.

Lithium-ion secondary battery preparation: the positive and negative plate and isolating film (PP single-layer isolating film) are wound into an electrical cell. Then the electrical cell is put into a battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4:3), and 2wt.% VC (vinylene carbonate). Welding and sealing, and then through chemical formation and aging processes to produce a lithium-ion secondary battery 71173200-280Ah.

The self-balancing performance, self-balancing capability, low-temperature performance, rate charging characteristics, and rate discharging characteristics of the battery were tested; the results are shown in Table 1.

### Embodiment 4, the lithium-ion battery with 3.8-3.95V self-balancing voltage

Positive plate preparation: first, dissolve the binder PVDF and the shuttle agent 2 in the solvent NMP, and keep stirring to dissolve them fully until the solution is clear. Add the lithium iron phosphate active material LiFePO₄ and the conductive agent SP to the above solution, and mix them to form a slurry. Among them, the solid mass ratio of LiFePO₄, SP, PVDF and shuttle agent 2 is 94:2:2:2, and the solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate, the compaction density is 2.4g/cm³, and the positive plate is made.

Negative plate preparation: stir and disperse graphite, conductive agent SP, binder PVDF and NMP evenly into a slurry (the mass ratio of graphite, SP and binder is 96:1:3), and the solid content of the slurry is 50%. The slurry is coated on a 6µm-thickness blank copper foil, the solvent is completely volatilized after drying in an oven. The surface density of the coating is 150g/m² (double-sided), and then rolled by an electrode plate, the compaction density is 1.65g/cm³, and the negative plate is made.

Lithium-ion secondary battery preparation: the positive and negative plate and isolating film (PP single-layer isolating film) are wound into an electrical cell. Then the electrical cell is put into a battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4:3), and 2wt.% VC (vinylene carbonate). Welding and sealing, and then through chemical formation and aging processes to produce a lithium-ion secondary battery 71173200-280Ah.

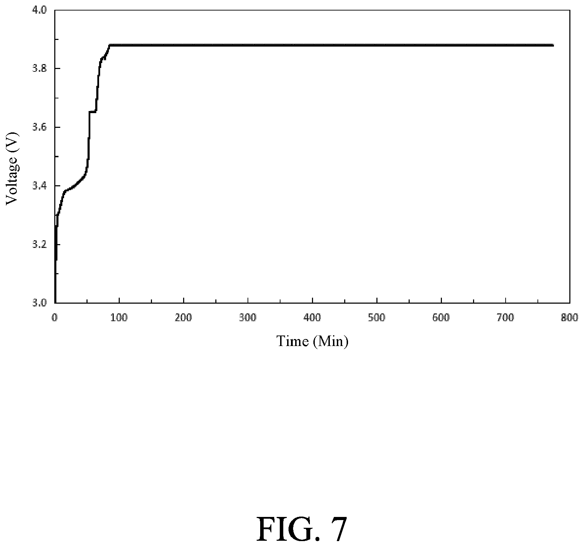

Test the self-balancing performance of the battery. From the voltage-time curve in FIG. 7, it can be seen that the battery voltage is stable at 3.88V, indicating that the shuttle agent 2 is undergoing a redox shuttle reaction, converting electrical energy into thermal energy, so that the battery voltage remains stable and does not rise.

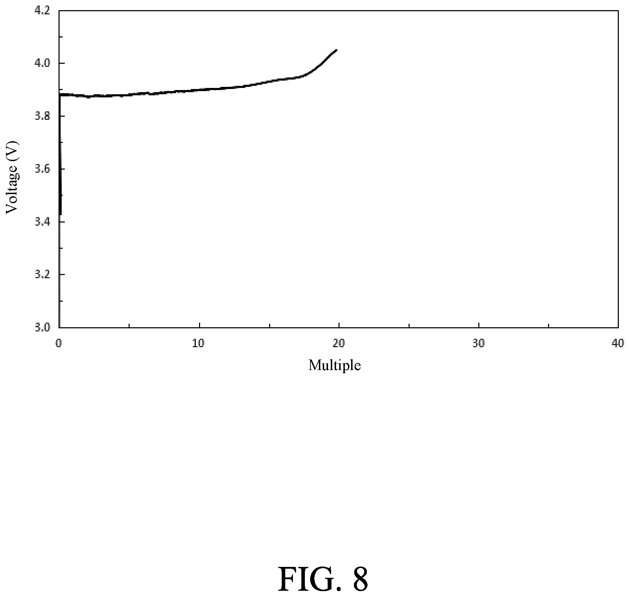

Test the self-balancing capability of the battery. From the voltage-capacity multiple curve in FIG. 8, when the self-balancing capability reaches to about 20 times of the capacity of a battery cell, the shuttle agent 2 is exhausted, the battery no longer has self-balancing ability, the battery voltage reaches the protection voltage of 4.0V, and the experiment is stopped.

Test the battery's low-temperature performance, rate charging characteristics, and rate discharging characteristics. The results are shown in Table 1.

### Embodiment 5, the lithium-ion battery with 3.8-3.95V self-balancing voltage

Positive plate preparation: first, dissolve the binder PVDF and the shuttle agent 1 in the solvent NMP, and keep stirring to dissolve them fully until the solution is clear. Add the active material LiFePO₄, lithium manganese iron phosphate and the conductive agent SP to the above solution, and mix them to form a slurry, among them, the solid mass ratio of LiFePO₄, lithium manganese iron phosphate, SP, PVDF and shuttle agent 1 is 70:24:2:2:2. The solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate, the compaction density is 2.4g/cm³, and the positive plate is made.

Negative plate preparation: stir and disperse graphite, conductive agent SP, binder PVDF and NMP evenly into a slurry (the mass ratio of graphite, SP and binder is 96: 1:3), and the solid content of the slurry is 50%. The slurry is coated on a 6µm-thickness blank copper foil. The solvent is completely volatilized after drying in an oven. The surface density of the coating is 150g/m² (double-sided), and then rolled by an electrode plate, the compaction density is 1.65g/cm³, and the negative plate is made.

Lithium-ion secondary battery preparation: the positive and negative plate and isolating film (PP single-layer isolating film) are wound into an electrical cell. Then the electrical cell is put into a battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4:3), and 2wt.% VC (vinylene carbonate). Welding and sealing, and then through chemical formation and aging processes to produce a lithium-ion secondary battery 71173200-280Ah; as shown in FIG 1.

### Comparative example 1, the lithium-ion battery with 3.8-3.95V self-balancing voltage

Positive plate preparation: first, dissolve the binder PVDF in the solvent NMP, and keep stirring to dissolve it fully until the solution is clear. Add the lithium iron phosphate active material LiFePO₄ and the conductive agent SP to the above solution, and mix them to form a slurry. Among them, the solid mass ratio of LiFePO₄, SP and PVDF is 96:2:2, and the solid content of the slurry solution is 50%. The slurry is coated on a 13µm-thickness blank aluminum foil current collector (positive electrode current collector). The solvent is completely volatilized after being dried in an oven. The surface density of the coating is 340g/m² (double-sided), and then rolled by an electrode plate. The compaction density is 2.4g/cm³, and the positive plate is made.

Negative plate preparation: stir and disperse graphite, conductive agent SP, binder PVDF and NMP evenly into a slurry (the mass ratio of graphite, SP and binder is 96:1:3), and the solid content of the slurry is 50%. The slurry is coated on a 6µm-thickness blank copper foil. The solvent is completely volatilized after drying in an oven. The surface density of the coating is 150g/m² (double-sided), and then rolled by an electrode plate. The compaction density is 1.65g/cm³, and the negative plate is made.

Lithium-ion secondary battery preparation: the positive and negative plate and isolating film (PP single-layer isolating film) are wound into an electrical cell. Then the electrical cell is put into the battery case, and the moisture is removed by drying. Then inject electrolyte (EC (ethylene carbonate)/EMC (ethyl methyl carbonate)/DMC (dimethyl carbonate) electrolyte of 1.1mol/L LiPF₆, wherein the mass ratio of EC: EMC: DMC is 3:4:3), 2wt.% VC (vinylene carbonate), and 1% shuttle agent 1. Welding and sealing, and then through chemical formation and aging processes to produce a lithium-ion secondary battery 71173200-280Ah.

The self-balancing performance, self-balancing capability, low-temperature performance, rate charging characteristics, and rate discharging characteristics of the battery were tested; the results are shown in Table 1.

The scheme and result of above-mentioned embodiments and comparative examples are summarized in the following Table 1:

**Table 1**

| | Shuttle agent type | Adding method and ratio | Self-bal ancing voltage V | Self-balanc ing capability (multiple of the capacity of a battery cell) | -20°C 0.2C discha rging ratio | 2C charging constant current ratio | 2C dischargi ng ratio |
|---|---|---|---|---|---|---|---|
| Embodiment 1 | Shuttle agent 1 | 2% of the positive electrode | 3.83 | 120 | 73.53 % | 92.75% | 97.71% |
| Embodiment 2 | Shuttle agent 1 | 4% of the negative electrode | 3.83 | 110 | 74.94 % | 93.79% | 98.83% |
| Embodiment 3 | Shuttle agent 1 | 1% of the positive electrode 2% of the negative electrode | 3.83 | 120 | 77.72 % | 94.99% | 99.80% |
| Embodiment 4 | Shuttle agent 2 | 2% of the positive electrode | 3.88 | 20 | 71.33 % | 90.94% | 97.02% |
| Embodiment 5 | Shuttle agent 1 | 2% of the positive electrode | 3.83 | 120 | 75.02 % | 90.08% | 96% |
| Comparative example 1 | Shuttle agent 1 | 1% of electrolyt e | 3.83 | 15 | 66.98 % | 87.13% | 91.94% |

From the above embodiments 1, 2, 3, 4 and the comparative example 1, due to the increase of the amount of shuttle agent added, the low temperature performance and rate characteristics of the battery are improved, and the self-balancing capability of the battery is also greatly improved, meanwhile, the safety performance of the battery has increased. From the embodiment 1 and the embodiment 5, for different positive electrode materials (lithium iron phosphate alone, lithium iron phosphate mixes lithium iron manganese phosphate), the self-balancing capability of the battery has not changed, and due to the material characteristics of lithium manganese iron phosphate, the low temperature performance is getting better and the rate characteristics is getting worse. From the embodiment 1 and the embodiment 4, the performance of shuttle agent 1 is better than that of shuttle agent 2.

Although the content of the present invention has been described in detail through the above preferred embodiments, it should be understood that the above description should not be considered as the limit to the present invention. Various modifications and alterations to the present invention will become apparent to those skilled in the art after reading the above disclosure. Therefore, the protection scope of the present invention should be defined by the appended claims.

## Claims

1. A safe lithium-ion battery, **characterized in that**, a positive plate and/or a negative plate of the lithium-ion battery contain a redox shuttle agent.

2. The safe lithium-ion battery according to claim 1, **characterized in that**, the redox shuttle agent is selected one or more from 2,5-di-tert-butyl-1,4 dimethoxybenzene, 3,5-di-tert-butyl-1,2-dimethoxybenzene, 4-tert-butyl-1, 2-dimethoxybenzene, naphthalene, anthracene, thianthrene and anisole.

3. The safe lithium-ion battery according to claim 1, **characterized in that**, a positive electrode active material of the lithium-ion battery is lithium iron phosphate, or a mixture of one or more of lithium iron phosphate and lithium nickel cobalt manganese oxide, lithium manganate, and lithium cobalt oxide.

4. The safe lithium-ion battery according to claim 3, **characterized in that**, when the positive electrode active material of the lithium-ion battery is the mixture of one or more of lithium iron phosphate and lithium nickel cobalt manganese oxide, lithium manganate, and lithium cobalt oxide, a mass ratio of the lithium iron phosphate is greater than 60%.

5. The safe lithium-ion battery according to claim 1, **characterized in that**, a positive electrode active material of the lithium-ion battery is a mixture of one or more of lithium iron phosphate, lithium manganese iron phosphate and lithium-rich lithium iron oxide.

6. The safe lithium-ion battery according to claim 5, **characterized in that**, the positive electrode active material of the lithium-ion battery is a mixture of one or more of lithium iron phosphate, lithium manganese iron phosphate and lithium-rich lithium iron oxide, a mass ratio of the lithium iron phosphate is greater than 60%.

7. The safe lithium-ion battery according to claim 1, **characterized in that**, the redox shuttle agent is added during a slurry-making process of the positive plate or the negative plate, and the addition amount of the redox shuttle agent is 0.1-10% of a total solid mass of the positive electrode or the negative electrode.

8. The safe lithium-ion battery according to claim 1, **characterized in that**, a working temperature range of the lithium-ion battery is -40°C to 70°C.

9. A manufacturing method of the safe lithium-ion battery according to any one of claims 1 to 8, **characterized in that**, the method includes the following steps:
S1. preparing a positive plate;
S1-1. mixing a positive electrode active material, binder, conductive agent and redox shuttle agent, using N-methylpyrrolidone as a dispersion medium, stirring and making a positive electrode slurry, and coating the positive electrode slurry on a positive electrode current collector to form a positive plate A1;
or,
S1-2. mixing a positive electrode active material, binder and conductive agent, using N-methylpyrrolidone as a dispersion medium, stirring and making a positive electrode slurry, and coating the positive electrode slurry on a positive electrode current collector to form a positive plate A2;
S2. preparing a negative plate;
S2-1. mixing graphite, binder, conductive agent and redox shuttle agent, using N-methylpyrrolidone as a dispersion medium, stirring and making a negative electrode slurry, and coating the negative electrode slurry on a negative electrode current collector to form a negative plate B1;
or,
S2-2. mixing graphite, binder and conductive agent, using N-methylpyrrolidone as a dispersion medium, stirring and preparing a negative electrode slurry, and coating the negative electrode slurry on a negative electrode current collector to form a negative plate B2;
S3. combining the positive plate A1 with the negative plate B1 or the negative plate B2 into a dry electrical cell, injecting liquid electrolyte and being soaking;
or, combining the positive plate A2 with the negative plate B1 into a dry electrical cell, injecting liquid electrolyte and being soaking.

10. The manufacturing method of the safe lithium-ion battery according to claim 9, **characterized in that**, in the step S1-1, a mass ratio of the positive electrode active material, the binder, the conductive agent and the redox shuttle agent is 83-97 : 1~3 : 1.9∼4 : 0.1~10.

11. The manufacturing method of the safe lithium-ion battery according to claim 9, **characterized in that**, in the step S2-1, a mass ratio of the graphite, the binder, the conductive agent and the redox shuttle agent is 85~97 : 2~3 : 0~2 : 0.1~10.

12. The manufacturing method of the safe lithium-ion battery according to claim 9, **characterized in that**, in the step S1-2, a mass ratio of the positive electrode active material, the binder and the conductive agent is 93-97 : 1~3 : 1.9~4; in the step S2-2, a mass ratio of the graphite, the binder and the conductive agent is 95~ 98 : 2~3 : 0∼2.
